## Europäisches Patentamt

## European Patent Office

## Office européen des brevets

(11) Veröffentlichungsnummer: **0 324 897**

**A1**

# (12) EUROPÄISCHE PATENTANMELDUNG

(21) Anmeldenummer: **88117072.4**

(22) Anmeldetag: **14.10.88**

(51) Int. Cl.⁴: **G01S 13/28 , G01S 7/40**

(30) Priorität: **18.01.88 CH 158/88**

(43) Veröffentlichungstag der Anmeldung:
**26.07.89 Patentblatt 89/30**

(84) Benannte Vertragsstaaten:
**CH DE FR GB IT LI NL SE**

(71) Anmelder: **SIEMENS-ALBIS
AKTIENGESELLSCHAFT
Postfach
CH-8047 Zürich(CH)**

(72) Erfinder: **Küpfer, Hanspeter
Stöckenstrasse 46
CH-8903 Birmensdorf(CH)**

(54) **Radarsystem mit einem digitalen Expander.**

(57) Im digitalen Expander werden mit zwei Digitalanalogwandlern (3, 4) analoge Modulationssignale ($S_I$, $S_Q$) erzeugt und durch einen Quadraturmodulator (5) auf eine Zwischenfrequenzlage angehoben. Die aufgrund beschränkter Träger und Spiegelfrequenzunterdrükkung im Quadraturmodulator (5) auftretenden Amplituden- und Phasenrippel des Ausgangssignales ($S_A$) werden durch einen Mehrfachregelkreis kompensiert. Dazu werden mittels der beiden Digitalanalogwandler (3,4) bei Bedarf nacheinander Kalibrationssignale (z. B. $P_0$, $P_{90}$, $P_{180}$, $P_{270}$) konstanter Amplitude jedoch unterschiedlicher Phasenlage erzeugt und die Amplituden ($A_0$, $A_{90}$, $A_{180}$, $A_{270}$) ihrer Ausgangssignale ($S_A$) in einem Amplitudendetektor (8) gemessen. Aus den gemittelten Amplitudenmesswerten ($\overline{A}_0$, $\overline{A}_{90}$, $\overline{A}_{180}$, $\overline{A}_{270}$) werden in einer Phasen- und Amplitudenkorrektureinheit (9) Stellgrößen (z. B. $S_{S1}$) für den Mehrfachregelkreis ermittelt, die über Stellglieder (10,11,12,13) die geforderten Offsets und Phasen- und Amplitudensymmetrie-Werte einstellen, bis die Abweichungen des Ausgangssignales ($S_A$) in Amplitude und Phase verschwinden.

## FIG 1

## Radarsystem mit einem digitalen Expander

Die Erfindung betrifft ein Radarsystem bei dem sendeseitig ein digitaler Expander, und empfangsseitig zur Auswertung die Impulskompressionstechnik vorgesehen ist, bei dem weiterhin zur Erzeugung der Sendeimpulse ein von einer zentralen Steuereinrichtung getakteter digitaler Speicher vorgesehen ist, aus dessen Inhalt über einen ersten Digitalanalogwandler ein analoges Basisbandsignal und über einen zweiten Digitalanalogwandler ein analoges Basisbandquadratursignal abgeleitet und einem Quadraturmodulator zugeführt wird, der ausgangsseitig in einer Zwischenfrequenzlage einen Sendeimpuls über ein von der zentralen Steuereinrichtung gesteuertes Tor an den eigentlichen Sender abgibt.

Radarsysteme, die sowohl eine große Reichweite, wie eine hohe Entfernungsauflösung haben sollen, lassen sich durch die Impulskompressionstechnik verwirklichen. Dabei ist das Sendesignal ein gedehnter frequenz- oder phasenmodulierter Impuls, der empfangsseitig in einem Korrelator komprimiert wird, der als Kompressor bekannt ist. In analoger Technik wurde die notwendige Dehnung des Sendesignales im Laufe der Jahre unterschiedlich realisiert. Die Eigenschaften der analogen Verzögerungsleitungen, wie z. B. eine SAW-Einrichtung, entsprechen den Anforderungen nach größerer Sendeimpulslänge und ausreichender Seitenzipfelunterdrückung nur unvollkommen und sind außerdem meist nur mit hohem Aufwand zu realisieren. Für die Erzeugung eines gedehnten modulierten Sendesignales wären digitale Expandersysteme die ideale Realisation für die Anforderungen im Hinblick auf die Impulskompressionstechnik. Vorteilhaft können mit digitalen Expandersystemen vollkohärente Wellenformen, ein exzellentes Signalrauschverhältnis sowie eine garantierte Austauschbarkeit des Modulationscodes erreicht werden. Bei der meist verwendeten Technik für eine digitale Synthese einer willkürlichen Wellenform wird die Wellenform aus einem Speicher mit konstanter Taktfrequenz ausgelesen. Eine Digitalanalogumwandlung gefolgt von einer Aufwärtsmischung liefert dabei ein gedehntes hochfrequentes Signal. Bei der Mischung des modulierenden Signales auf ein zugefügtes Trägersignal (Aufwärtsmischung) kann entweder Doppelseitenband- oder Einseitenbandmischung verwendet werden. Einseitenbandmischung erfordert zwar Quadraturmodulation, wäre aber in vielen Beziehungen vorteilhafter: Gegenüber der Doppelseitenbandmischung könnte eine höhere Signalbandbreite erzeugt werden und die Filteranforderungen wären wesentlich unkritischer. Als nachteilig erweist sich dabei die beschränkte Träger- und Spiegelfrequenzunterdrückung der handelsüblichen Quadraturmischer, welche durch Filter nicht mehr beseitigt werden kann und für gute Korrelationseigenschaften (Seitenzipfelunterdrückung) im Empfänger nicht immer genügt. Ebenso ist die erforderliche hohe Pegelstabilität des Trägersignals sowie der hohe Abgleichaufwand ein in der Praxis gravierender Nachteil. Die bekannten digitalen Expandersysteme werden daher den Anforderungen, wie sie sich bei Anwendung in der Impulskompressionstechnik stellen, nur bedingt gerecht.

Der Erfindung liegt die Aufgabe zugrunde, ein Radarsystem mit einem digitalen Expander anzugeben, mit dem eine ausreichend gute Seitenzipfelunterdrückung im Empfänger bei hoher Bandbreite des Sendesignales in einem großen Temperaturbereich gewährleistet ist, ohne daß eine aufwendige Abgleicharbeit und Stabilisierung des Trägersignalpegels erforderlich ist.

Diese Aufgabe wird erfindungsgemäß dadurch gelöst, daß mittels der beiden Digital-Analog-Wandler bei Bedarf nacheinander Kalibrationssignale konstanter Amplitude jedoch unterschiedlicher Phasenlage erzeugt werden, daß für jede Phasenlage der Amplitudenwert des dem jeweiligen Kalibrationssignal entsprechenden Ausgangssignales in einem Amplitudendetektor gemessen wird, und daß ein Regelkreis vorgesehen ist, in dem aus den jeweiligen gemittelten Amplitudenmeßwerten in einer Phasen- und Amplitudenkorrektureinheit Stellgrößen ermittelt werden, die über Stellglieder die geforderten Offsets und Phasen- und Amplitudensymmetrie-Werte einstellen, bis die Abweichungen des Ausgangssignales in Amplitude und Phase verschwinden.

Der aufgrund beschränkter Träger- und Spiegelfrequenzunterdrückung auftretende Amplituden- und Phasenripple der Ausgangssignale (Sendesignale) wird in einem Regelkreis, mittels einer Amplituden- und Phasenkorrektureinheit korrigiert. Damit kann unter Anwendung von Quadraturmodulation ein idealer Wellenzug abgestrahlt werden, womit beim Empfänger gute Korrelationseigenschaften und eine daraus resultierende gute Seitenzipfelunterdrückung bei hoher Signalbandbreite erzielt werden kann.

Weitere vorteilhafte Ausgestaltungen der Erfindung sind in den Unteransprüchen wiedergegeben.

Im folgenden wird ein Ausführungsbeispiel der Erfindung anhand von Zeichnungen näher erläutert. Es zeigen Fig. 1 ein Blockschaltbild eines digitalen Expanders für ein Radarsystem nach der Erfindung. Fig. 2 ein Zeigerdiagramm für ein aus I- und Q-Komponenten gebildetes ideales Signal. Fig. 3 - 5 Zeigerdiagramme für aus I- und Q-Komponenten gebildete Signale mit verschiedenen Symmetriestörungen. Fig. 6 ein Blockschaltbild einer Phasen- und Amplitudenkorrektureinheit zu einem Expander nach der Erfindung.

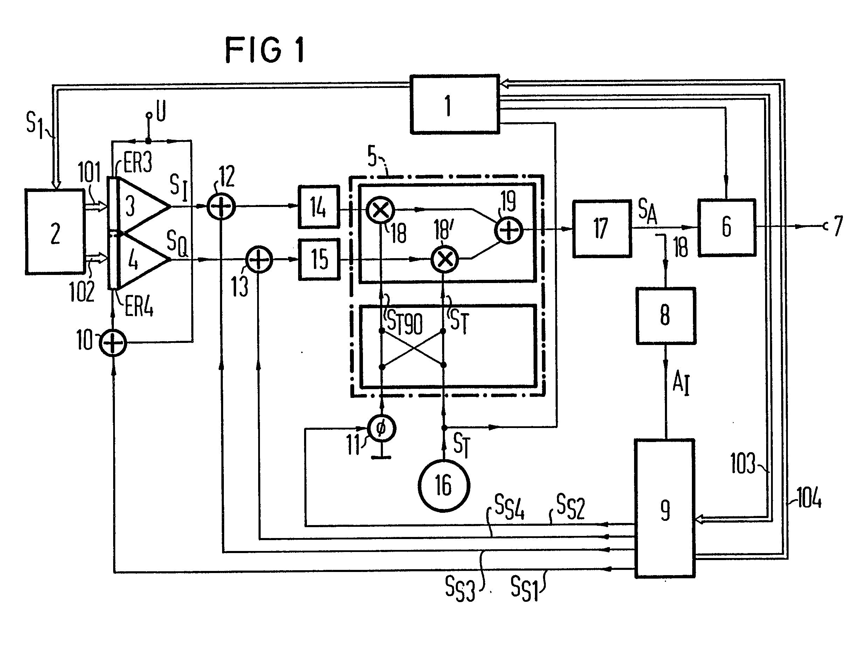

Der Expander nach Fig. 1 weist einen digitalen Speicher 2 auf, welcher über die Leitungen 101 und 102 mit einem ersten Digitalanalogwandler 3 und einem zweiten Digitalanalogwandler 4 verbunden ist. Die Ausgangssignale $S_I$ und $S_Q$ der beiden Digitalanalogwandler 3 und 4 werden über Stellglieder 12 bzw. 13 und nachgeschaltete Tiefpaßfilter 14 bzw. 15 zu einem Quadraturmodulator 5 geleitet. Der Quadraturmodulator 5 ist über einen weiteren Eingang mit einem von einem Zwischenfrequenz-Trägeroszillator 16 stammenden Signal $S_T$ beaufschlagt und ausgangsseitig über ein Bandbaßfilter 17 an ein Tor 6 angeschlossen, dessen Ausgang 7 mit einer Sendeeinrichtung verbunden ist. Das System umfaßt zu dem einen Regelkreis, in dessen Signalweg ein Amplitudendetektor 8 sowie eine diesem nachgeschaltete Phasen- und Amplitudenkorrektureinheit 9 eingefügt sind. Eingangsseitig wird der Amplitudendetektor 8 mit dem am Ausgang des Bandbaßfilters 17 abgezweigten Signal $S_A$ beaufschlagt, wobei am Ausgang der Phasen und Amplitudenkorrektureinheit 9 die Stellgrößen $S_{S1}$, $S_{S2}$, $S_{S3}$ und $S_{S4}$ zu entsprechenden Stellgliedern 10, 11, 12, 13 geführt werden. Der Referenzeingang ER3 des Digitalanalogwandlers 3, so wie ein weiterer Eingang des Stellgliedes 10 ist mit einer Referenzspannungsquelle U verbunden, wobei das Stellglied 10 ausgangsseitig an den Referenzeingang ER4 des Digitalanalogwandlers 4 angeschlossen ist. Das Stellglied 11 ist ausgangsseitig mit einem weiteren Eingang des Quadraturmodulators 5 verbunden. Eine zentrale Steuereinheit 1 ist mit dem Trägeroszillator 16, dem Tor 6 und der Phasen- und Amplitudenkorrektureinheit 9 sowie mit dem digitalen Speicher 2 verbunden.

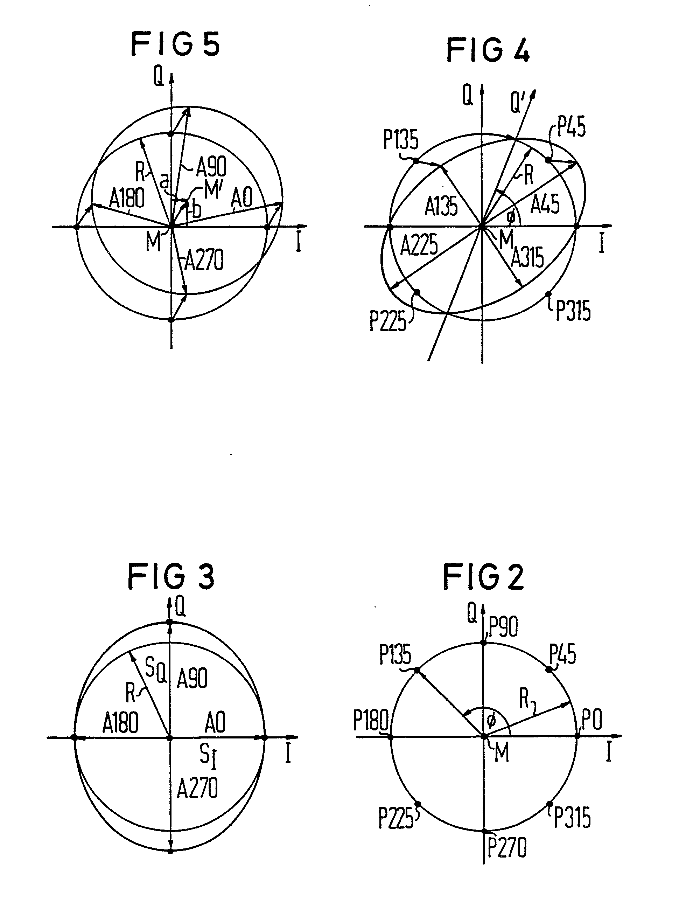

Die Arbeitsweise des Systems nach Fig. 1 wird anhand der in Fig. 2 - 5 dargestellten Zeigerdiagramme erläutert.

Im digitalen Speicher 2 ist der auf das Trägersignal $S_T$ aufzumodulierende Wellenzug in digitaler Form codiert. Der Speicherinhalt enthält dabei sowohl den Inphasen - wie den Quadraturanteil des Wellenzugs, wobei beide Wellenzüge jeweils über die Leitungen 101 und 102 in die Digitalanalogwander 3 und 4 mit konstanter Taktfrequenz eingelesen werden. Die Taktrate wird durch ein Steuersignal $S_1$ aus der zentralen Steuereinrichtung 1 bestimmt und kann beispielsweise 20 MHz betragen. Im Digitalanalogwandler 3 wird dabei ein analoges Basisbandsignal $S_I$ im Digitalanalogwandler 4 ein analoges Basisbandsignal $S_Q$ erzeugt, die zueinander in Phasenquadratur stehen. Die aus dem I-Anteil und Q-Anteil zusammengesetzten Signalvektoren bilden dynamische (d.h. sich in ihrer Phase und Amplitude ändernde) Modulationssignale, die den phasenkodierten Sendeimpuls erzeugen. Ein wesentlicher Erfindungsgedanke besteht nun darin, daß neben dem eigentlichen Betrieb der Einrichtung (Erzeugung phasenkodierter Sendesignale) im Speicher 2 nacheinander (eventuell zyklisch) Kalibrationssignale $P_0$, $P_{45}$, $P_{90}$, $P_{135}$ usw. bis $P_{315}$ erzeugt werden. Diese Kalibrationssignale $P_0$ bis $P_{315}$ sind aus den I- und Q-Anteilen zusammengesetzte statische Signalvektoren, die für eine bestimmte Zeitdauer und in einer noch zu definierenden Reihenfolge erzeugt werden, und für einen Amplituden- und Phasenabgleich (Kalibration) der phasenkodierten Basisbandsignale $S_I$ und $S_Q$ dienen. (Fig. 2) Die Amplituden R dieser Signalvektoren $\sqrt{I^2 + Q^2}$ müssen alle gleich sein und sollen dabei etwa der konstanten Nominalamplitude der im Betrieb zu erzeugenden Wellenform entsprechen. Die Phasen $\phi$ der Signalvektoren sollen den in den Indizes der Modulationssignale angegebenen Werten in Grad entsprechen (z. B. $\phi 135 = 135$ Grad bei $P_{135}$). Die Basisbandsignale $S_I$ und $S_Q$ (Fig. 1) werden über ein Tiefpaßfilter 14 bzw. 15, das die hochfrequenten Signalanteile entfernt, dem Ouadraturmodulator 5 zugeführt und auf das zugefügte Trägersignal $S_T$ aufmoduliert (Einseitenbandmischung). Im Quadraturmodulator wird durch eine 90° Phasendrehung aus dem Trägersignal $S_T$ ein Signal $S_{T90}$ erzeugt, die dem Mischer 18 und 18' zugeführt werden, in denen das Signal $S_I$ bzw. $S_Q$ auf das Trägersignal $S_T$ bzw. $S_{T90}$ multiplikativ aufmoduliert werden. Eine Überlagerung der modulierten Trägersignale im nachgeschalteten Summierer 19 ergibt dann das Ausgangssignal SA, das zur Entfernung vom Harmonischen ein Bandpassfilter 17 durchläuft und über ein Tor 6 zum eigentlichen Sender (Ausgang 7) gelangt. Das Tor 6 dient dem sauberen Austasten der Wellenform und wird von der zentralen Steuereinrichtung 1 gesteuert. Das oben beschriebene unkompensierte (d.h. ohne Kalibrationssignale arbeitende) System wird zu Folge beschränkter Träger- und Spiegelunterdrückung durch die Quadraturmodulation einen gewissen vom idealen Wellenzug nach Fig. 2 abweichenden Amplituden- und Phasenripple aufweisen. Durch die im folgenden angegebene Kompensationsschaltung (Mehrfachregelkreis) ist es möglich, einen Wellenzug zu erzeugen, der bei für Radaranwendungen typischerweise während seiner Zeitdauer ungefähr konstantem Amplitudenverlauf eine gute Träger- und Spiegelunterdrükung aufweist. Vorteilhafterweise kann ein selbstkompensierender Abgleich mit Hilfe der Kalibrationsvektoren $P_0$ bis $P_{315}$ dann eingeleitet werden, wenn das Gatter 6 geschlossen ist, so daß am Ausgang keine störenden Signale auftreten. Dies kann vor der Inbetriebnahme, in den Betriebspausen oder während des Betriebes in den Pulslücken geschehen. Dazu wird über einen Auskoppler 18 ein kleiner Teil eines durch ein Kalibrationssignal erzeugten Ausgangssignal $S_A$ einem Regelkreis mit Amplitudendetektor 8 und nachgeschalteter Phasen- und Amplitudenkorrektureinheit 9 zugeführt. Für jedes der von den Digitalanalogwandlern 3 und 4 erzeugten Kalibrationssignale $P_0$ bis $P_{315}$ wird nacheinander mit dem Amplitudendetektor 8 die nach erfolgter Modulation entstehende Amplitude $A_0$ bis $A_{315}$ gemessen. In der nachgeschalteten Phasen- und Amplitudenkorrektureinheit 9 werden die

3

Meßwerte $A_0$ bis $A_{315}$ gemittelt und daraus entsprechende Stellgrößen $S_{S1}$ bis $S_{S4}$ abgeleitet, die den Amplituden- und Phasenripple des Sendeimpulses kompensieren. Da statische Kalibrationsvektoren $P_0$ bis $P_{3\cdot 5}$ verwendet werden ist eine gute Mittelung der entsprechenden Meßwerte $A_0$ bis $A_{315}$ möglich, wodurch ein besonders präziser Abgleich durchgeführt werden kann. Der Amplitudendetektor 8 muß dabei von der Trägerquelle (Trägeroszillator 16) abgeschirmt und entkoppelt werden.

Bei einem idealen System würden alle Meßwerte $A_0$ bis $A_{315}$ exakt den geforderten konstanten Amplitudenwert R annehmen. Die zu kompensierenden Fehler im System erzeugen aber Abweichungen, so daß im allgemeinen der Amplitudenwert R ungleich den nach erfolgter Quadraturmodulation detektierten Amplitudenwerten $A_0$ bis $A_{315}$ sein wird. Durch Phasenfehler im System, wenn beispielsweise die Phasenverschiebung zwischen den Basisbandsignalen $S_I$ und $S_Q$ oder die Phasenverschiebung zwischen den Trägersignalen $S_T$ und $S_{T90}$ nicht genau $90°$ beträgt, wird eine vollständige Spiegelfrequenzunterdrückung verhindert. Ebenso führen Offsetfehler, d. h. die am Ausgang der Digitalanalogwandler 3,4 und im Quadraturmodulator 5 auftretenden Offsets zu einer nicht vollständigen Trägerunterdrückung. Die Zeigerdiagramme nach Fig. 3 bis 5 zeigen die am Amplitudendetektor 8 auftretenden Signale und wie sich diese bei Systemunvollkommenheiten in den Meßwerten $A_0$ bis $A_{315}$ auswirken.

In Fig. 3 ist ein Zeigerdiagramm für ein System mit gestörter Amplitudensymmetrie dargestellt, wobei das Verhältnis $S_Q / S_I$ ein wenig von 1 abweicht. Der Betrag des Signalvektors $S_Q$ des Quadratursignales ist beispielsweise gegenüber dem konstanten idealen Amplitudenwert R etwas vergrößert, wodurch die Einhüllende der Signalvektoren $S_I$ und $S_Q$ von einem Kreis mit dem Mittelpunkt M (ideale Form bei konstantem R) in eine elliptische Form übergeht. Vorteilhafterweise kann mit Hilfe der Kalibrationssignale $P_0$, $P_{90}$, $P_{180}$, $P_{270}$ durch Messung von deren vier Amplitudenwerten, nämlich $A_0$, $A_{90}$, $A_{180}$ und $A_{270}$ im Amplitudendetektor 8 das Verhältnis $S_Q$ zu $S_I$ folgendermaßen bestimmt werden:

$$S_Q / S_I = \frac{A_{90} + A_{270}}{A_0 + A_{180}} .$$

Dementsprechend kann eine Steuergröße $ST_1$ für die Regelung der Amplitudenasymmetrie durch folgende Differenzbildung gewonnen werden $ST_1 = (A_{90} - A_0) + (A_{270} - A_{180})$ wobei diese Steuergröße $ST_1$ zur Eliminierung der Amplitudenasymmetrie gegen 0 geregelt wird.

Fig. 4 zeigt ein Zeigerdiagramm für ein System mit gestörter Phasensymmetrie, wobei der Phasenwinkel $\phi$ zwischen dem Basissignal $S_I$ und $S_Q$ ein wenig von $90°$ abweicht (Achse $Q'$). Dem Amplitudenwert R der Kalibrationssignale $P_{45}$, $P_{135}$, $P_{225}$ und $P_{315}$ entsprechen die gemessenen Amplitudenwerte $A_{45}$, $A_{135}$, $A_{225}$ und $A_{315}$, wobei die Einhüllende der Signalvektoren $S_I$ und $S_Q$ von der idealen Kreisform (System ohne Fehler) mit dem Mittelpunkt M in eine elliptische Form übergehen. Vorteilhafterweise kann durch die Messung der Amplitudenwerte $A_{45}$, $A_{135}$, $A_{225}$ und $A_{315}$ die Phasenwinkelbeziehung

$$\frac{90 - \phi}{2}$$

näherungsweise bestimmt werden:

$$\frac{90 - \phi}{2} = \frac{A_{45} - A_{135} + A_{225} - A_{315}}{A_{45} + A_{135} + A_{225} + A_{315}}$$

Eine Steuergröße $ST_2$ für die Regelung der Phasenasymmetrie wird dabei durch folgende Differenzbildung gewonnen: $ST_2 = (A_{45} - A_{135}) + (A_{225} - A_{315})$ wobei diese Steuergröße zur Unterdrückung der Phasenasymmetrie gegen 0 geregelt wird.

Amplituden- und Phasenasymmetrie verhindern je eine vollständige Spiegelfrequenzunterdrückung im System.

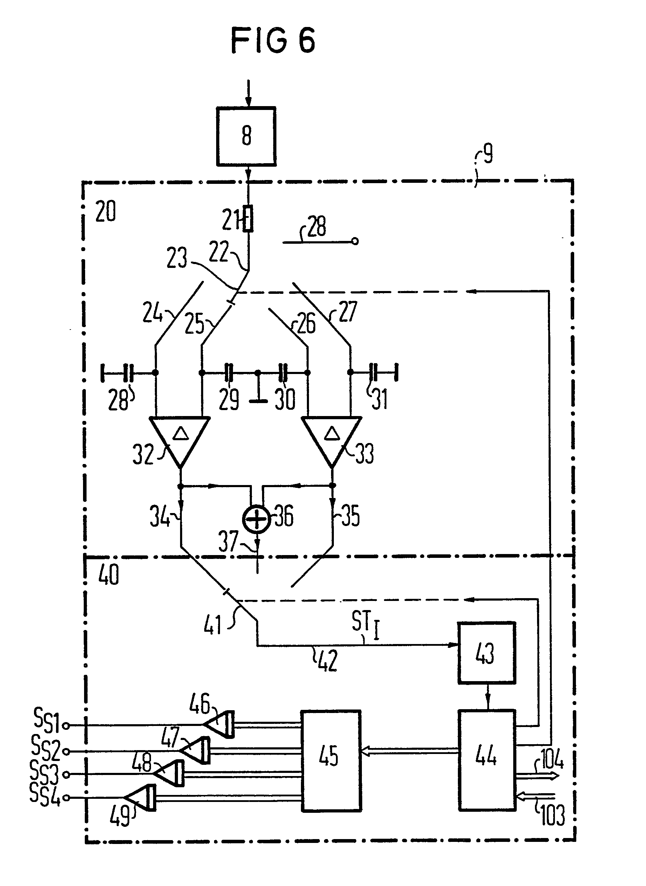

In Fig. 5 ist ein Zeigerdiagramm für ein System vorgestellt, welches sowohl im I- als auch im Q-Kanal die Offsets $a \neq 0$ bzw. $b \neq 0$, und damit eine beschränkte Trägerunterdrückung aufweist. Der, durch die Einhüllende der Signalvektoren $S_I$ und $S_Q$ gebildete Kreis (Mittelpunkt M, Radius R) wird durch die Offsets a und b in eine neue Position verschoben (Mittelpunkt $M'$). Dementsprechend werden die im Amplitudendetektor 8 gemessenen Amplitudenwerte vom idealen Wert R abweichen, wie für die den Kalibrationssignalen

$P_0$, $P_{90}$, $P_{180}$ und $P_{270}$ entsprechenden Amplitudenwerte $A_0$, $A_{90}$, $A_{180}$ und $A_{270}$ gezeigt ist. Der I-Offset a sowie der Q-Offset b kann vorteilhaft durch Messung der Amplitudenwerte $A_0$, $A_{90}$, $A_{180}$ und $A_{270}$ näherungsweise bestimmt werden: $a = A_0 - A_{180}$ $b = A_{90} - A_{270}$. Die Bestimmung einer Steuergröße $ST_3$ für den I-Offset a, sowie einer Steuergröße $ST_4$ für den Q-Offset b erfolgt dabei durch folgende Differenzbildung:

$$ST_3 = A_0 - A_{180}$$
$$ST_4 = A_{90} - A_{270}$$

wobei beide Steuergrößen $ST_3$ und $ST_4$ zur Offsetkompensation auf 0 geregelt werden. Durch die Offsets wird eine vollständige Trägerfrequenzunterdrückung verhindert.

Eine besondere Bedeutung kommt der Eigenschaft des obengenannten Verfahrens zu, bei kleinen Störgrößen voneinander linear unabhängige Steuergrößen zu liefern. Die Unabhängigkeit ist leicht zu verifizieren, wenn der Einfluß beliebig kombinierter Störungseinflüsse untersucht wird. Ändert sich beispielsweise der Q-Offset b, so wird die Differenz $A_{90} - A_{270}$ wunschgemäß beeinflußt, nicht jedoch der Messwert für die Amplitudenasymmetrie, welche die in diesem Falle konstantbleibende Summe $A_{90} + A_{270}$ beinhaltet. Ändert sich die Phasenasymmetrie, so wird andererseits beispielsweise der Messwert für den Q-Offset nicht beeinflußt, da er durch die konstantbleibende Differenz $A_{90} - A_{270}$ dargestellt wird. Mit den Steuergrößen werden nun die entsprechenden Stellglieder zur Kompensation von Offset und Symmetrie angesteuert.

Durch die Phasen- und Amplitudenkorrektureinheit 9 nach Fig. 1 werden also maximal vier voneinander unabhängige Regelkreise gebildet, welche je nach Wahl und Abfolge der Einzelmessungen durch den Amplitudendetektor 8 mehr oder weniger gleichzeitig oder nacheinander so einschwingen werden, daß die Steuergrößen $ST_1$ bis $ST_4$ beliebig klein werden. Durch den Null-Abgleich der Steuergrößen $ST_1$ bis $ST_4$ werden in der Phasen- und Amplitudenkorrektureinheit 4 entsprechende Stellgrößen $S_{S1}$, $S_{S2}$, $S_{S3}$ und $S_{S4}$ ermittelt, die den Stellgliedern 10, 11, 12 und 13 zugeführt werden. Im einzelnen wird dabei aus der Steuergröße $ST_1$ (Amplitudenasymmetrie) die Stellgröße $S_{S1}$ abgeleitet und dem Stellglied 10 zugeführt. Die aus der Steuergröße $ST_2$ (Phasenasymmetrie) abgeleitete Stellgröße $S_{S2}$ wird zum Stellglied 11 geleitet. Die Stellgrößen $S_{S3}$ und $S_{S4}$ (I- und Q-Offset) sind den Steuergrößen $ST_3$ bzw. $ST_4$ zugeordnet und werden den Stellgliedern 12 bzw. 13 zugeführt. Zu Kontroll- und Synchronisationszwecken kann die Phasen- und Amplitudenkorrektureinheit 9 über Signalleitungen 103 und 104 mit der zentralen Steuereinrichtung 1 verbunden sein, der ihrerseits das Trägersignal $S_T$ des Trägeroszillators 16 zu Synchronisationszwecken zugeführt werden kann.

Bei der Aufbereitung der Steuergrößen $ST_1$ bis $ST_4$ in der Phasenund Amplitudenkorrektureinheit 9, wie bei der Realisierung der Stellglieder 10 bis 13 sind verschiedene Lösungen denkbar.

Die Stellglieder könnten anstatt in analoger Technik, wie in Fig. 1, auch in digitaler Technik realisiert werden. Beispielsweise kann das Stellglied 10 digital realisiert werden, in dem die Ansteuerung der Digitalanalogwandler 3 und 4 entsprechend korrigiert würde, in dem die nominelle Ansteuerung (vom Speicher 2) so in eine Korrigierte umgerechnet wird, daß die ermittelte Steuergröße $ST_1$ verschwinden würde. Allerdings erfordert diese Realisierung eine sehr hohe Auflösung der Digitalanalogwandler 3 und 4, welche zusammen mit der erforderlichen hohen Taktrate zur Zeit noch schwierig zu erreichen ist. Damit kann die Umrechnung auf den korrigierten Wert ohne schwerwiegende Bandbreitenbeschränkung kaum rasch genug erfolgen.

Ebenso können die Steuergrößen in digitaler analoger oder gemischter Technik erzeugt werden. Werden die Einzelmesswerte $A_0$ -$A_{315}$ digital gewandelt und abgespeichert, so ist dafür eine sehr gute Auflösung der Analogdigitalwandler erforderlich, da am Ende eine kleine Differenz von großen Werten maßgebend ist. Um diese zu umgehen wird vorteilhafterweise eine teilweise analoge Realisierung der Phasen- und Amplitudenkorrektureinheit 9 vorgeschlagen.

Nachfolgend wird auf Fig. 6 Bezug genommen, in der Einzelheiten der Phasen- und Amplitudenkorrektureinheit 9 gezeigt sind. In der Phasen- und Amplitudenkorrektureinheit 9 ist eine analogarbeitende Speicher- u. Differenzbildungseinheit 20 und eine Abgleicheinheit 40 in digitaler Technik vorgesehen. Der Amplitudendetektor 8 ist über einen Widerstand 21 mit einer Eingangsleitung 22 verbunden. Dabei sind 5 Ausgangsleitungen 24, 25, 26, 27 und 28 über einen Umschalter 23 mit der Eingangsleitung 22 verbindbar. Die Ausgangsleitungen 24 und 25 sind an die Eingänge eines ersten Differenzverstärkers 32 angeschlossen und über Kondensatoren 28 und 29 mit Null-Potential verbunden. Die Eingänge eines zweiten Differenzverstärkers 33 sind an die Ausgangsleitungen 26 und 27 angeschlossen, die ebenfalls über Kondensatoren 30 und 31 mit dem Null-Potential verbunden sind. Eine Ausgangsleitung 34 des Differenzverstärkers 32, sowie eine Ausgangsleitung 35 des Differenzverstärkers 33 sind eingangsseitig an einem Summierverstärker 36 angeschlossen. In der nachfolgenden Abgleicheinheit 40 sind die Ausgangsleitungen 34 und 35 sowie die Ausgangsleitung 37 des Summierverstärkers 36 über einen Umschalter 41 mit der Eingangsleitung 42 verbindbar. Die Eingangsleitung 42 ist an einem AD-Wandler; im einfachsten Fall einem Komparator 43 angeschlossen, dem eine Steuereinrichtung 44 nachgeschaltet ist. Ein Speicher 45 ist eingangsseitig mit der Steuereinrichtung 44 verbunden und ausgangsseitig an vier Digitalanalogwandler 46, 47, 48 und 49 angeschlossen. Die Steuereinrichtung 44 ist mit den Umschaltern 23 und 4l sowie über die Leitungen 103 und 104 mit der zentralen Steuereinrichtung 1 (Fig. 1) verbunden.

Die Schaltung nach Fig. 6 funktioniert folgendermaßen: Um eine Amplituden- und Offsetkompensation nach Fig. 3 bzw Fig. 5 durchzuführen, werden zyklisch die Kalibrationssignale $P_0$, $P_{90}$, $P_{180}$ und $P_{270}$ erzeugt, wobei gleichzeitig das Tor 6 geschlossen wird. Dadurch wird verhindert, daß die Kalibrationssignale $P_0$ bis $P_{270}$ an die Sendeeinrichtung 7 (Fig. 1) gelangen. In einem ersten Zyklus werden die den phasenverschobenen Kalibrationssignalen $P_0$, $P_{90}$, $P_{180}$ und $P_{270}$ entsprechenden Amplituden $A_0$, $A_{90}$, $A_{180}$ und $A_{270}$ der Ausgangssignale $S_A$ im Amplitudendetektor 8 gemessen und nacheinander über den Umschalter 23 in entsprechende Kondensatoren 28, 29, 30 und 31 abgespeichert. Dabei besitzen die Kalibrationssignale $P_0$ bis $P_{270}$ alle die selbe Amplitude und sind jeweils aufeinanderfolgend um $90^\circ$ phasenverschoben. Jedes der Kalibrationssignale z. B. $P_0$ wird dabei für eine solche Zeitdauer erzeugt, daß die jeweilige Amplitudenmessung z. B. $A_0$ und deren Abspeicherung vorgenommen werden kann, worauf das nächste Kalibrationssignale z. B. $P_{90}$ erzeugt und dessen Amplitude z. B. $A_{90}$ gemessen wird. In einem darauffolgenden Zyklus werden wieder die Kalibrationssignale $P_0$ bis $P_{270}$ erzeugt und in analoger Weise die jeweils gemessenen Amplitudenmeßwerte $A_0$ bis $A_{270}$ in den Kondensatoren 28 bis 31 abgespeichert. Mehrere dieser Zyklen werden solange durchlaufen, bis der Regelkreis einschwingt, und in den Kondensatoren 28 bis 31 aus den einzelnen Zyklen gemittelte Amplitudenmeßwerte $\overline{A}_0$ bis $\overline{A}_{270}$ verfügbar sind. Aus den gemittelten Meßwerten $\overline{A}_0$ bis $\overline{A}_{270}$ können entsprechen der Gleichung nach Fig. 3 die Steuergröße $ST$· für die Amplitudenkompensation, sowie die Steuergrößen $ST_3$ und $ST_4$ entsprechend den Gleichungen nach Fig. 5 für die Offsetkompensation bestimmt werden. Dazu werden aus jeweils zwei oder vier der gemittelten abgespeicherten Meßwerte $\overline{A}_0$ bis $\overline{A}_{270}$ in den Differenzverstärkern 32 und 33 Differenzsignale gebildet, die einer Addiereinrichtung 36 zugeführt werden. Mit dem Umschalter 41 können die einzelnen Differenzsignale aus den Differenzverstärkern 32 und 33 (Leitung 34 und 35), sowie die Summe der Differenzsignale (Leitung 37) als gewünschte Steuergrößen $ST_1$, $ST_3$ und $ST_4$ analog entnommen werden. Im einzelnen entspricht dabei das Differenzsignal an der Leitung 34 z. B. der Steuergröße $ST_3$ das Differenzsignal an der Leitung 35 z. B. der Steuergröße $ST_4$ und das Summendifferenzsignal an der Leitung 37 der Steuergröße $ST_1$. In der Vergleichseinheit 40 werden die drei Steuergrößen $ST_1$, $ST_3$ und $ST_4$ von den durch die Steuereinrichtung 44 gesteuerten Umschalter 41 über die Leitung 42 zu einem Analogdigitalwandler 43 geleitet. Durch entsprechende Steuerung des Umschalters 41 über die Steuereinrichtung 44 ist es möglich, drei Regelkreise entsprechend der Steuergrößen $ST_1$, $ST_3$ und $ST_4$ entweder gleichzeitig oder nacheinander einschwingen zu lassen. Erfolgt das Einschwingen der einzelnen Regelkreise z. B. nacheinander, wird in der Vergleichseinheit 40 zunächst eine Steuergröße z. B. $ST_1$ vom Umschalter 41 über die Leitung 42 zum Analogdigitalwandler 43 geleitet. Dieser Analogdigitalwandler 43 ist vorteilhaft ein 1bit-Analogdigitalwandler bzw. ein Komparator, wobei nur das Vorzeichen der Steuergröße z. B. $ST_1$ benutzt wird, um im geschlossenen Regelkreis eine entsprechende Stellgröße z. B. $S_{S1}$ digital entweder über eine Zählerinkrementierung oder Dekrementierung in einem in der Steuereinrichtung 44 vorgesehenen Zähler zu vergrößern oder zu verkleinern. Nach einer gewissen Einschwingzeit, oder sobald das Vorzeichen der Steuergröße z. B. $S_{T1}$ zu pendeln beginnt, ist der entsprechende Regelkreis eingeschwungen und der Stellwert z. B. $S_{S1}$ kann im Zwischenspeicher 45 digital gehalten werden. Daraufhin wird der nächste Regelkreis aktiviert, in dem über den Umschalter 41 die nächste Steuergröße z. B. $S_{T2}$ dem Analogdigitalwandler 43 zugeführt wird, wobei die Ermittlung der entsprechenden Stellgröße z. B. $S_{S2}$ in analoger Weise erfolgt. Somit werden für jede der Steuergrößen $S_{T1}$, $S_{T3}$ und $S_{T4}$ entsprechende digitale Stellgrößen $S_{S1}$, $S_{S3}$ und $S_{S4}$ erzeugt, die in dem Zwischenspeicher 45 digital gehalten werden. Der Zwischenspeicher 45 ist ausgangsseitig mit je einem Digitalanalogwandler 46, 47 und 48 verbunden, um analoge Stellgrößen $S_{S1}$, $S_{S3}$ und $S_{S4}$ zu erzeugen. Bezugnehmend auf Fig. 1 wird dabei die Stellgröße $S_{S1}$ zur Kompensation des Amplitudenfehlers des Ausgangssignales $S_A$ dem Stellglied 10 zugeführt. Die Stellgrößen $S_{S3}$ und $S_{S4}$ kompensieren die Offsetfehler des Systems in dem sie den Stellgliedern 12 und 13 zugeführt werden.

Nach Ermittlung der Stellgrößen $S_{S1}$, $S_{S3}$ und $S_{S4}$ für die Amplituden- und Offsetkompensation werden in einem weiteren Zyklus in den beiden Digitalanalogwandlern 3 und 4 (Fig. 1) die Kalibrationssignale $P_{45}$, $P_{-35}$, $P_{225}$ und $P_{315}$ erzeugt. Aus diesen Kalibrationssignalen $P_{45}$ bis $P_{315}$ wird in analoger Weise eine Stellgröße $S_{S2}$ ermittelt, die die Phasenkompensation des Ausgangssignales $S_A$ ermöglicht. Dabei werden in mehreren Zyklen die den phasenverschobenen Kalibrationssignalen $P_{45}$ bis $P_{315}$ entsprechenden Amplituden $A_{45}$ bis $A_{315}$ der Ausgangssignale $S_A$ nacheinander in den Kondensatoren 28, 29, 30 und 31 gespeichert und gemittelt. Aus den gemittelten Amplitudenmeßwerten $\overline{A}_{45}$ bis $\overline{A}_{315}$ wird in der Vergleichseinheit 40 die Steuergröße $S_{T2}$ entsprechend der Gleichung nach Fig. 4 abgeleitet und dem Analogdigitalwandler 43 zugeführt. Die der Steuergröße $S_{T2}$ entsprechende digitale Stellgröße $S_{S2}$ wird über den Zwischenspeicher 45 dem Digitalanalogwandler 49 zugeführt, um ausgangsseitig die analoge Stellgröße $S_{S2}$ zu erzeugen. Diese Stellgröße $S_{S2}$ wird dem Stellglied 11 (Fig. 1) zugeführt, um die Phasenfehler des Ausgangssignales $S_A$ zu kompensieren.

Als Alternative oder als zusätzliche Möglichkeit kann eine Mitteilung der Amplitudenmeßwerte z. B. $A_0$, $A_{90}$, $A_{180}$, $A_{270}$ dadurch vorgenommen werden, in dem das zu mittelnde Kalibrationssignal vor dem Umschalten zum nächsten Kalibrationssignal solange anliegt, daß in der zur Verfügung stehenden Zeit in der Speicher-und Differenzbildungseinheit 20 bereits eine Mittelwertbildung erfolgt.

Außer den Offsets der in Fig. 6 verwendeten Differenz und Summierverstärkern 32, 33 und 36, welche offsetarm gebaut werden können da sie langsam arbeiten können, werden durch die vorgeschlagene Anordnung sämtliche Offsets kompensiert. Insbesondere auch derjenige des Amplitudendetektors 8 (Differenzbildung).

Vorteilhaft arbeitet das oben beschriebene digitale Expandersystem beim Selbstabgleich und im Betrieb mit Amplituden ähnlicher Größe. Damit werden auch noch gewisse nichtlineare Effekte der Mischermultiplikation im Quadraturmodulator 5 kompensiert.

Mit dem erfindungsgemäßen digitalen Expandersystem kann bei sorfältigem Aufbau eine Träger- und Spiegelfrequenzunterdrückung von mindestens 50 dB im gewünschten Temperaturbereich erreicht werden.

## Ansprüche

1. Mit phasenkodierten Sendeimpulsen arbeitendes Radarsystem bei dem sendeseitig ein digitaler Expander, und empfangsseitig zur Auswertung die Impulskompressionstechnik vorgesehen ist, bei dem weiterhin zur Erzeugung der Sendeimpulse ein von einer zentralen Steuereinrichtung (1) getakteter digitaler Speicher (2) vorgesehen ist, aus dessen Inhalt über einen ersten Digital-Analogwandler (3) ein analoges Basisbandsignal ($S_I$) und über einen zweiten Digital-Analogwandler (4) ein analoges Basisbandquadratursignal ($S_Q$) abgeleitet und einem Quadraturmodulator (5) zugeführt wird, der ausgangsseitig in einer Zwischenfrequenzlage einen Sendeimpuls über ein von der zentralen Steuereinrichtung (1) gesteuertes Tor (6) an den eigentlichen Sender abgibt,

dadurch gekennzeichnet, daß mittels der beiden Digital-Analog-Wandler (3,4) bei Bedarf nacheinander Kalibrationssignale (z. B. $P_0$, $P_{90}$, $P_{180}$, $P_{270}$) konstanter Amplitude jedoch unterschiedlicher Phasenlage erzeugt werden, daß für jede Phasenlage der Amplitudenwert (z. B. $A_0$) des dem jeweiligen Kalibrationssignal (z. B. $P_0$) entsprechenden Ausgangssignales in einem Amplitudendetektor (8) gemessen wird, und daß ein Mehrfachregelkreis vorgesehen ist, in dem aus den jeweiligen gemittelten Amplitudenmeßwerten (z. B. $\overline{A}_0$, $\overline{A}_{90}$, $\overline{A}_{180}$, $\overline{A}_{270}$) in einer Phasen- und Amplitudenkorrektureinheit (9) Stellgrößen (z. B. $S_{S1}$) ermittelt werden, die über Stellglieder (10,11,12, 13) die geforderten Offsets und Phasen- und Amplitudensymmetrie-Werte einstellen, bis die Abweichungen des Ausgangssignales (SA) in Amplitude und Phase verschwinden.

2. Radarsystem nach Anspruch 1,

dadurch gekennzeichnet, daß in zwei, sich wenigstens einmal wiederholenden Zyklen, nacheinander jeweils vier, aus einem I- und Q-Anteil zusammengesetzte Kalibrationssignale (z. B. $P_0$, $P_{90}$, $P_{180}$, $P_{270}$) konstanter Amplituden erzeugt werden, die unter sich je eine Phasenverschiebung von $90^\circ$ aufweisen.

3. Digitales Expandersystem nach einem der vorhergehenden Ansprüche,

dadurch gekennzeichnet, daß in der Phasen- und Amplitudenkorrektureinheit (9) durch entsprechend gesetzmäßige Summen und/oder Differenzbildungen aus den phasenverschobenen gemittelten Amplitudenmeßwerten z. B. ( $\overline{A}_0$ bis $\overline{A}_{270}$) voneinander linear unabhängige Steuergrößen z. B. ($ST_1$, $ST_3$, $ST_4$) bestimmt werden.

4. Digitales Expandersystem nach Anspruch 5,

dadurch gekennzeichnet, daß insbesondere vier Steuergrößen ($ST_1$ bis $ST_4$), nämlich für die Offset-Kompensation des Basisbandsignals ($S_I$) die Offset-Kompensation des Basisbandquadratursignales ($S_Q$)die Kompensation der Amplitudenasymmetrie des Ausgangssignales ($S_A$) sowie die Kompensation der Phasenasymmetrie des Ausgangssignales ($S_A$) aus den gemittelten Amplitudenmeßwerten ( $\overline{A}_0$ bis $\overline{A}_{315}$) bestimmt werden, und daß die einzelnen Steuergrößen ($ST_1$ bis $ST_4$) im geschlossenen Mehrfachregelkreis gleichzeitig oder nacheinander auf einen beliebig kleinen Wert geregelt werden.

5. Radarsystem nach einem der vorhergehenden Ansprüche,

dadurch gekennzeichnet, daß die Phasen-und Amplitudenkorrektureinheit (9) eine Speicher- und Differenzbildungseinheit (20) zum Abspeichern von maximal vier zyklisch abgetasteten Amplitudenmeßwerten (z. B. $A_0$, $A_{90}$, $A_{180}$, $A_{270}$) aufweist, die jeweils über mehrere Zyklen gemittelt und anschließend analogen Differenz- und Summierverstärkern (32, 33, 36) zugeführt werden, und daß eine Vergleichseinheit (40)

7

vorgesehen ist, in der die einzelnen Steuergrößen (z. B. $ST_1$) einem Analogdigitalwandler (43) zugeführt werden, der als Reaktion auf das Vorzeichen der jeweiligen Steuergröße (z. B. $ST_1$) ein positives oder negatives Ein-bit-Signal an eine nachgeschaltete Steuereinrichtung (44) abgibt, um einen entsprechenden Stellwert digital zu vergrößern oder zu verkleinern, und daß nach erfolgtem Abgleich einer Steuergröße (z. B. $ST_1$) ein nachgeschalteter Zwischenspeicher den entsprechenden Stellwert digital hält, worauf die Ermittlung der den anderen Steuergrößen (z. B. $ST_3$) entsprechenden Stellwerte in analoger Weise erfolgt, und daß die digitalen Stellwerte jeweils einem dem Zwischenspeicher (45) nachgeschalteten Digitalanalogwandler (z. B. 42, 47, 48) zugeführt werden, um entsprechende analoge Stellgrößen (z. B. $S_{S1}$, $S_{S3}$, $S_{S4}$) zu erzeugen.

# FIG 1

EP 0 324 897 A1

88P9801

88P9801

FIG 5

FIG 4

FIG 3

FIG 2

88P9801

# FIG 6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-3 852 746 (LOWENSCHUSS) * Spalte 2, Zeile 14 - Spalte 3, Zeile 3; Spalte 4, Zeilen 50-56; Figur 1 * --- | 1 | G 01 S 13/28 G 01 S 7/40 |
| A | US-A-4 003 054 (GOLDSTONE) * Figur 1; Spalte 1, Zeile 67 - Spalte 2, Zeile 45 * --- | 1-5 | |
| A | PATENT ABSTRACTS OF JAPAN, Band 9, Nr. 195 (P-379)[1918], 13. August 1985, Seite 83 P 379; JP-A-60 61667 (MITSUBISHI DENKI K.K.) 09-04-1985 --- | 1 | |
| A | US-A-4 028 700 (CAREY et al.) * Spalte 3, Zeile 59 - Spalte 5, Zeile 26; Figur 1 * --- | 1 | |
| A | PROCEEDINGS OF IGARSS '86 SYMPOSIUM, ESA SP-254, Band II, August 1986, Seiten 1195-1199, Paris, FR; K. TANAKA et al.: "Pulse compression test results of the sar transmitter and receiver" * Insgesamt * ------ | 1 | RECHERCHIERTE SACHGEBIETE (Int. Cl.4) G 01 S |

Der vorliegende Recherchenbericht wurde für alle Patentansprüche erstellt

| Recherchenort | Abschlußdatum der Recherche | Prüfer |
|---|---|---|
| DEN HAAG | 21-12-1988 | DEVINE J.J |